# EUROPEAN PATENT SPECIFICATION

(11) **EP 2 987 417 B1**
(45) Date of publication and mention of the grant of the patent: **17.07.2019**
(21) Application number: 14783055.8
(22) Date of filing: 11.04.2014
(51) Int. Cl.: A23L 5/00, A23L 2/56, A23L 27/00, A23L 27/10, A23L 31/00

(54) **USE OF MUSHROOM EXTRACT AS TASTE IMPROVING AGENT**
VERWENDUNG VON PILZEXTRAKT ALS GESCHMACKSVERBESSERNDES MITTEL
UTILISATION D'EXTRAIT DE CHAMPIGNON COMME AGENT D'AMÉLIORATION DE GOÛT

(30) Priority: 11.04.2013 JP 2013083234
(43) Date of publication of application: 24.02.2016
(73) Proprietor: Takasago International Corporation, Tokyo 144-8721 (JP)
(72) Inventor: CHATANI Noriyuki, Tokyo 144-8721 (JP); HIRAMOTO Tadahiro, Hiratsuka-shi Kanagawa 254-0073 (JP); NEGISHI Osamu, Fujimi-shi Saitama 354-0035 (JP)
(74) Representative: Fédit-Loriot
(86) International application number: PCT/JP2014/060463
(87) International publication number: WO 2014/168231

(56) References cited:
- EP-A2- 1 190 627
- WO-A1-2006/112036
- WO-A1-2006/112037
- WO-A1-2006/112037
- CN-A- 101 715 948
- JP-A- H07 115 933
- JP-A- 2001 069 939
- JP-A- 2002 003 480
- JP-A- 2002 191 317
- JP-A- 2004 149 618
- JP-A- 2009 256 285
- JP-A- 2009 256 285
- JP-B2- 3 014 575

## Description

### Technical Field

The present invention relates to the use of a mushroom extract obtained from at least one of a mushroom of the genus Boletus and a mushroom of the genus Amanita.

### Background Art

Heretofore, in order to satisfy the demands for requests of more delicious foods or drinks from consumers, there have been developed not only materials that enhance or suppress basic five tastes of taste shown by sweet taste, salty taste, bitter taste, sour taste, and umami but also materials that improve various tastes such as fruit juice feeling, oily feeling, and richness.

For example, there may be mentioned a material that imparts umami and richness by a tea extract (Patent Document 1), a material that improves odd smell and enhances rich taste by a protease-treated product of whey protein and a lipase-treated product of milk fat (Patent Document 2), and the like.

Moreover, there has been hitherto proposed a taste improving material using a mushroom extract. As methods for producing the mushroom extract, for example, there may be mentioned a method for obtaining it by heat extraction from truffles or porcini under a reduced pressure atmosphere (Patent Document 3) and a method for obtaining it by a known extraction method such as hot-water extraction or extraction with an organic solvent (Patent Document 4).

### Background Art Documents

### Patent Documents

Patent Document 1: JP-A-2005-137286
Patent Document 2: JP-A-9-37735
Patent Document 3: JP-A-2000-14353
Patent Document 4: JP-A-7-115933

In addition, JP 3 014 575 B2 discloses a taste-improving agent for potassium-containing drinks and foods.

JP 2001 069 939 A discloses a method of preparing a mushroom extract by roasting mushroom at 150°C to 250°C for a given period.

WO 2006/112 036 A1 discloses a method of removing odor and taste components from mushroom and obtaining useful biological active components.

WO 2006/112 037 A1 discloses a method of removing odor and taste components from mushroom and obtaining useful biological active components.

JP 2009 256 285 A discloses a method of preparing mushroom by aerating it in water until it becomes odorless and tasteless and filtering the resultant solution to obtain a liquid having no odor and taste.

### Summary of the Invention

### Problems that the Invention is to Solve

However, since the material of Patent Document 3 is characterized by containing a flavor characteristic to a mushroom as described therein, there is a disadvantage that usable kinds of foods or drinks and the amount to be added are greatly limited. Moreover, in Patent Document 4, as in Patent Document 3, an effect of reducing harsh taste of potassium chloride is disclosed but there is not shown an effect of enhancing senses of taste such as umami, richness, and salty taste along with an improvement in the bitter taste of potassium chloride as disclosed by the present invention.

With regard to these taste improving materials, a certain degree of effect is observed but is not necessarily satisfactory. Therefore, it has been desired a material that can be utilized in a wide variety of objects, is inexpensive, and is excellent in improving effects.

Thus, the mushroom extracts obtained by conventional methods have flavor characteristic to a mushroom and hence cannot be said to be sufficient for improving tastes of various kinds of foods or drinks.

Therefore, an object of the present invention is the use of a mushroom extract as a taste improving agent for a food or a drink, the mushroom extract being obtained by a production process comprising: a step of solvent-extracting at least one of a mushroom of the genus Boletus and a mushroom of the genus Amanita, thereby obtaining a solvent extract, and a step of removing a flavor component from the solvent extract by performing an adsorption treatment and removing an adsorbed fraction. The mushroom extract of the present disclosure that does not have a characteristic flavor of existing mushroom extracts, can enhance senses of taste such as umami, richness, salty taste, spicy feeling, milky feeling, sweet taste, and fruit juice feeling and can suppress sour taste and bitter and astringent taste, and thus can impart excellent taste improving properties to various kinds of foods or drinks.

In addition, another object of the present invention is to provide a method to produce a food or drink with enhanced taste comprising adding to the food or a drink a mushroom extract being obtained by a production process comprising: a step of solvent-extracting at least one of a mushroom of the genus Boletus and a mushroom of the genus Amanita, thereby obtaining a solvent extract; and a step of removing a flavor component from the solvent extract by performing an adsorption treatment and removing an adsorbed fraction.

### Means for Solving the Problems

To the above end, there is provided use of a mushroom extract and a method to produce a food or drink according to claims 1 to 6.

### Advantage of the Invention

Compared to the existing mushroom extract, the mushroom extract used according to the present invention can be added to a variety of foods or drinks, does not have characteristic flavor, can enhance senses of taste such as umami, richness, salty taste, spicy feeling, milky feeling, sweet taste, and fruit juice feeling, and can suppress sour taste and bitter and astringent taste. Therefore, it becomes possible to improve taste properties that are related to various preferences.

Moreover, as for the mushroom extract used in the present invention, the mushroom extract can be easily produced by using commercial mushrooms or mushroom processed products (e.g., dry mushroom, powder products thereof, and mushroom extracts).

### Modes for Carrying Out the Invention

The present invention will be explained in detail in the following.

Herein, "% by mass" and "% by weight", "ppm by mass" and "ppm by weight", "ppb by mass" and "ppb by weight", and "parts by mass" and "parts by weight" have the same meanings, respectively. In addition, the case of being simply described as "ppm" indicates that it means "ppm by weight".

The mushroom usable in the present invention are mushrooms of the genus Boletus and the genus Amanita. As the mushroom of the genus Boletus, there may be preferably mentioned Boletus edulis, Boletus aestivalis, Boletus hiratsukae Nagasawa, Boletus violaceofuscus, and the like and, as the mushroom of the genus Amanita, there may be mentioned Amanita hemibapha Amanita caesarea, and the like. Further preferably, there may be mentioned Boletus edulis and Amanita hemibapha.

At the time of producing the mushroom extract used in the present invention, a raw mushroom can be used. In addition, commercially available mushroom processed products such as dry mushrooms, powder products thereof, and mushroom extracts can also be used.

Moreover, as solvents for use in solvent extraction, there may be mentioned water, acetone, ethanol, glycerin, ethyl acetate, methyl acetate, carbon dioxide, 1-butanol, 2-butanol, butane, 1-propanol, 2-propanol, propylene glycol, methanol, and the like. Of these, from the standpoints of easy handling, safety, and health, there may be mentioned preferably water or hydrous ethanol, more preferably water. These solvents may be used singly or two or more thereof may be used in combination.

Water is not particularly limited but there may be mentioned ultrapure water, ion-exchange water, filtered water through a reverse osmosis membrane (RO), distilled water, and tap water and, from the standpoint of production of foods or drinks, ion-exchange water is preferable.

Furthermore, the temperature at the time of solvent extraction is not particularly limited but, from the standpoint of extraction efficiency, it is preferably from 15 to 90 degrees Celsius, further preferably from 40 to 70 degrees Celsius.

The time for extraction is not particularly limited but, from the standpoint of extraction efficiency, it is preferably from 30 minutes to 20 hours, further preferably from 1 hour to 5 hours.

The pressure for extraction is not particularly limited and may be under any of a normal pressure condition, a reduced pressure condition, and a pressurized condition but, from the standpoint of easy handling, preferably, extraction under a normal pressure condition may be mentioned.

Then, a flavor component is removed from the thus obtained solvent extract by absorption.

The flavor adsorbent for use in the adsorption treatment is not particularly limited but there may be mentioned active carbon, silica gel, alumina, zeolite, synthetic adsorbents, ion-exchange resins, porous glass, cyclodextrins, and the like. From the standpoints of adsorption efficiency and economical efficiency, there may be mentioned preferably active carbon and synthetic adsorbents, further preferably synthetic adsorbents.

The extract after the flavor removal may be further concentrated by a known concentration method such as membrane concentration or vacuum concentration and also may be dried into a powder by a known drying method such as freeze drying or hot-air drying.

It is also possible to obtain an objective mushroom extract by performing solvent extraction after a flavor component characteristic to a mushroom is removed beforehand from a raw mushroom, a dry mushroom, a powdered product, or the like by performing a commonly known method such as a steam distillation method, a processing method under reduced pressure, or an extraction method with supercritical carbon dioxide.

By the addition of the mushroom extract to a food or drink, it is possible to produce the food or drink having improved taste. Specifically, senses of taste such as umami, richness, salty taste, spicy feeling, milky feeling, sweet taste, and fruit juice feeling can be enhanced and also sour taste and bitter and astringent taste can be suppressed. In addition, the bitter taste characteristic to potassium chloride can be reduced.

As such foods or drinks, there may be mentioned drinks such as fruit juices, carbonated drinks, dairy drinks, vinegar drinks, soft drinks, milk, lactic acid bacteria beverages, and soy milk, soups such as soup stocks, Chinese soups, stews, and curries, processed foods using meats, chicken meat, and fishes as ingredients, seasonings, furikake (dried seasoning powders), instant foods, snack foods, canned foods, dairy products, confectionaries, frozen desserts, and the like but the foods or drinks are not limited thereto.

The mushroom extract used as taste improving agent of the present invention may be used in combination with a component or additive that can be added or blended to ordinary foods or drinks or oral compositions to form a taste improving agent composition.

As the component or additive that can be added or blended to ordinary foods or drinks or oral compositions, there may be, for example, mentioned taste improving agents (e.g., hesperidin-based compounds such as hesperidin glycoside) other than the agent of the present invention; pH adjusting agents such as tartaric acid and sodium hydrogen carbonate; preservatives, antibacterial agents, and antiseptics such as sodium benzoate and potassium sorbate; functional substances having a nutritious function or a biology control function, such as docosahexaenoic acid (DHA), eicosapentaenoic acid (EPA), various animal or plant extracts (rosemary, sage, chitin and chitosan, royal jelly, propolis, etc.), and dietary fibers such as hardly digestive dextrin; antioxidants such as L-ascorbic acid and tocopherol; thickeners such as carboxymethyl cellulose calcium and methyl cellulose; colorants and pigments such as β-carotene, caramel, paprika, annatto, and monascus; sweeteners such as aspartame, acesulfame potassium, xylitol, and sucralose; acidulants such as lactic acid, citric acid, and malic acid; seasonings such as sodium glutamate and L-theanine; emulsifiers such as sucrose fatty acid esters, glycerol fatty acid esters, and lecithin; fragrances, flavors, and the like. Examples of the flavors include citrus flavors, fruit flavors, savory flavors, and the like. Examples of the kinds of the citrus flavors include lemon, lime, grapefruit, orange, and the like. Examples of the kinds of fruit flavors include strawberry, apple, melon, pear, pineapple, grapes, peach, banana, and the like. Of the sweeteners, particularly, aspartame, acesulfame potassium, xylitol, and sucralose that are synthetic sweeteners have miscellaneous taste such as bitter taste and harsh taste and the taste improving agent of the present invention can improve the miscellaneous taste.

### Examples

The following will illustrate the present invention in detail based on Examples. However, it is to be understood that the present invention is not restricted to the Examples.

### [Example 1] Boletus edulis extract

To 100 g of a dry Boletus edulis powder was added 2000 g of ion-exchange water, followed by stirring and extracting at 50°C for 2 hours. After cooling to room temperature, solid-liquid separation was conducted by using a centrifuge to obtain 1534 g of an extract liquid. The obtained extract liquid was allowed to pass through a column packed with a synthetic adsorbent DIAION HP-20 (manufactured by Mitsubishi Chemical Corporation) at a rate of SV=5/h and the resulting resin-treated liquid was freeze-dried, thereby obtaining 33.16 g of a Boletus edulis extract of Example 1.

### [Example 2] Amanita hemibapha extract

To 20 g of dry Amanita hemibapha was added 300 g of ion-exchange water, followed by stirring and extracting at 50°C for 2 hours. After cooling to room temperature, solid-liquid separation was conducted by using a centrifuge to obtain 190 g of an extract liquid. The obtained extract liquid was allowed to pass through a column packed with a synthetic adsorbent DIAION HP-20 (manufactured by Mitsubishi Chemical Corporation) at a rate of SV=5/h and the resulting resin-treated liquid was freeze-dried, thereby obtaining 4.15 g of an Amanita hemibapha extract of Example 2.

### [Comparative Example 1]

To 100 g of dry Boletus edulis powder was added 2000 g of ion-exchange water, followed by stirring and extracting at 50°C for 2 hours. After cooling to room temperature, solid-liquid separation was conducted by using a centrifuge to obtain 1534 g of an extract liquid. The obtained extract liquid was freeze-dried and the product was taken as a Boletus edulis extract of Comparative Example 1.

### [Comparative Example 2]

To 20 g of dry Amanita hemibapha was added 300 g of ion-exchange water, followed by stirring and extracting at 50°C for 2 hours. After cooling to room temperature, solid-liquid separation was conducted by using a centrifuge to obtain 190 g of an extract liquid. The obtained extract liquid was freeze-dried and the product was taken as an Amanita hemibapha extract of Comparative Example 2.

### [Example 3] Preparation of taste-improved reduced-salt noodle soup

The Boletus edulis extract of Example 1 was added to a reduced-salt noodle soup having a formulation 1 shown in Table 1 so as to be 20 ppm. Thus, a taste-improved reduced-salt noodle soup was obtained.

**[Table 1]**

| [Formulation 1] Item | Blending amount (g) |
|---|---|
| Soy sauce | 50.0 |
| Sugar | 24.0 |
| Dried bonito extract | 16.0 |
| Sodium chloride | 1.2 |
| Potassium chloride | 6.0 |
| Water | 902.8 |
| Total | 1000.0 |

### [Test Example 1] Sensory Evaluation

According to the following procedure, the sensory evaluation of the taste-improved reduced-salt noodle soup of Example 3 was conducted.

### [Procedure]

The reduced-salt noodle soup of Example 3 and a control sample [reduced-salt noodle soup to which the taste improving agent was not blended] were tasted and the taste-improved reduced-salt noodle soup of Example 3 was sensorily evaluated according to the evaluation criteria of Table 2. The evaluation was conducted by 7 expert panelists and an average value thereof was calculated. Table 3 shows the results of the sensory evaluation.

**[Table 2]**

| | |
|---|---|
| Very strong (very delicious) | 7 points |
| Strong (delicious) | 6 points |
| Slightly strong (slightly delicious) | 5 points |
| Comparable to control | 4 points |
| Slightly weak (slightly bad) | 3 points |
| Weak (bad) | 2 points |
| Very weak (very bad) | 1 point |

**[Table 3]**

| | Umami | Richness | Salty taste | Deliciousness | Comment |
|---|---|---|---|---|---|
| Control | 4.0 | 4.0 | 4.0 | 4.0 | |
| Example 3 | 6.0 | 5.9 | 5.3 | 6.3 | Umami and richness increase. Bitter taste characteristic to potassium chloride is reduced. |

### [Example 4] Preparation of taste-improved reduced-salt miso soup

The Boletus edulis extract prepared in Example 1 was added to a commercially available reduced-salt miso soup (a product in which 25% of sodium chloride was reduced) so as to be 40 ppm. Thus, a taste-improved reduced-salt miso soup was obtained.

### [Test Example 2]

### Sensory Evaluation

The sensory evaluation of the reduced-salt miso soup prepared in Example 4 was conducted in the same manner as in Test Example 1. The control sample is a commercially available reduced salt miso soup to which no Boletus edulis extract was blended.

Table 4 shows the results of the evaluation.

**[Table 4]**

| | Umami | Richness | Salty taste | Deliciousness | Comment |
|---|---|---|---|---|---|
| Control | 4.0 | 4.0 | 4.0 | 4.0 | |
| Example 4 | 5.9 | 5.7 | 5.6 | 6.4 | Umami and richness increase. Salty taste is enhanced. |

### [Example 5] Preparation of taste-improved reduced-salt Chinese soup

The Boletus edulis extract prepared in Example 1 was added to a commercially available reduced-salt Chinese soup (a product in which 40% of sodium chloride was reduced) so as to be 20 ppm. Thus, a taste-improved reduced-salt soup was obtained.

### [Test Example 3] Sensory Evaluation

The sensory evaluation of the reduced-salt Chinese soup prepared in Example 5 was conducted in the same manner as in Test Example 1. The control sample is a commercially available reduced-salt Chinese soup to which no Boletus edulis extract was blended.

Table 5 shows the results of the evaluation.

**[Table 5]**

| | Umami | Richness | Salty taste | Spicy feeling | Deliciousness | Comment |
|---|---|---|---|---|---|---|
| Control | 4.0 | 4.0 | 4.0 | 4.0 | 4.0 | |
| Example 5 | 5.7 | 5.6 | 5.6 | 6.4 | 6.6 | Umami and richness increase. Salty taste and spicy feeling are enhanced. |

### [Example 6] Preparation of taste-improved retort curry

The Boletus edulis extract prepared in Example 1 was added to a commercially available retort curry so as to be 1000 ppm. Thus, a taste-improved retort curry was obtained.

### [Comparative Example 3] Preparation of retort curry

The Boletus edulis extract prepared in Comparative Example 1 was added to a commercially available retort curry so as to be 1000 ppm. Thus, a retort curry of Comparative Example 3 was obtained.

### [Test Example 4] Sensory Evaluation

The sensory evaluation of the retort curries prepared in Example 6 and Comparative Example 3 was conducted in the same manner as in Test Example 1. The control sample is a commercially available retort curry to which no Boletus edulis extract was blended.

Table 6 shows the results of the evaluation.

**[Table 6]**

| | Richness | Spicy feeling | Deliciousness | Comment |
|---|---|---|---|---|
| Control | 4.0 | 4.0 | 4.0 | |
| Comparative Example 3 | 5.1 | 4.9 | 4.6 | Richness increases. |
| Example 6 | 5.9 | 6.4 | 6.3 | Richness increases. Spicy feeling is emphasized. |

### [Example 7] Preparation of taste-improved cream stew

The Boletus edulis extract prepared in Example 1 was added to a commercially available cream stew so as to be 100 ppm. Thus, a taste-improved cream stew was obtained.

### [Comparative Example 4] Preparation of cream stew

The Boletus edulis extract prepared in Comparative Example 1 was added to a commercially available cream stew so as to be 100 ppm. Thus, a cream stew of Comparative Example 4 was obtained.

### [Test Example 5] Sensory Evaluation

The sensory evaluation of the cream stews prepared in Example 7 and Comparative Example 4 was conducted in the same manner as in Test Example 1. The control sample is a commercially available cream stew to which no Boletus edulis extract was blended.

Table 7 shows the results of the evaluation.

**[Table 7]**

| | Richness | Milky feeling | Deliciousness | Comment |
|---|---|---|---|---|
| Control | 4.0 | 4.0 | 4.0 | |
| Comparative Example 4 | 5.0 | 4.6 | 4.4 | Richness increases. |
| Example 7 | 5.7 | 5.6 | 5.7 | Richness increases. Milky feeling is emphasized. |

### [Example 8] Preparation of taste-improved 20% orange juice

The Boletus edulis extract prepared in Example 1 was added to a commercially available 20% orange juice so as to be 10 ppm. Thus, a taste-improved 20% orange juice was obtained.

### [Comparative Example 5] Preparation of 20% orange juice

The Boletus edulis extract prepared in Comparative Example 1 was added to a commercially available 20% orange juice so as to be 10 ppm. Thus, a 20% orange juice of Comparative Example 5 was obtained.

### [Test Example 6] Sensory Evaluation

The sensory evaluation of the orange juices prepared in Example 8 and Comparative Example 5 was conducted in the same manner as in Test Example 1. The control sample is a commercially available 20% orange juice to which no Boletus edulis extract was blended.

Table 8 shows the results of the evaluation.

**[Table 8]**

| | Sweet taste | Fruit juice feeling | Deliciousness | Comment |
|---|---|---|---|---|
| Control | 4.0 | 4.0 | 4.0 | |
| Comparative Example 5 | 4.1 | 4.0 | 1.9 | Odd taste and odd smell derived from the extract are present and unpleasant feeling is given. |
| Example 8 | 5.3 | 5.4 | 6.0 | Natural sweet taste and juicy feeling are enhanced. |

### [Example 9] Preparation of taste-improved café au lait drink

The Boletus edulis extract prepared in Example 1 was added to a commercially available café au lait drink so as to be 10 ppm. Thus, a taste-improved café au lait drink was obtained.

### [Comparative Example 6] Preparation of café au lait drink

The Boletus edulis extract prepared in Comparative Example 1 was added to a commercially available café au lait drink so as to be 10 ppm. Thus, a café au lait drink of Comparative Example 6 was obtained.

### [Test Example 7] Sensory Evaluation

The sensory evaluation of the café au lait drinks prepared in Example 9 and Comparative Example 6 was conducted in the same manner as in Test Example 1. The control sample is a commercially available café au lait drink to which no Boletus edulis extract was blended.

Table 9 shows the results of the evaluation.

**[Table 9]**

| | Richness | Milky feeling | Sweet taste | Bitter taste | Deliciousness | Comment |
|---|---|---|---|---|---|---|
| Control | 4.0 | 4.0 | 4.0 | 4.0 | 4.0 | |
| Comparative Example 6 | 4.9 | 4.3 | 4.3 | 3.9 | 1.7 | Odd taste and odd smell derived from the extract are present and unpleasant feeling is given. |
| Example 9 | 5.6 | 5.7 | 5.3 | 4.3 | 5.6 | Natural milky feeling, richness, and sweet taste are enhanced. |

### [Example 10] Preparation of taste-improved non-calorie cola drink

The Boletus edulis extract prepared in Example 1 was added to a commercially available non-calorie cola drink so as to be 20 ppm. Thus, a taste-improved non-calorie cola drink was obtained.

### [Comparative Example 7] Preparation of non-calorie cola drink

The Boletus edulis extract prepared in Comparative Example 1 was added to a commercially available non-calorie cola drink so as to be 20 ppm. Thus, a non-calorie cola drink of Comparative Example 7 was obtained.

### [Test Example 8] Sensory Evaluation

The sensory evaluation of the non-calorie cola drinks prepared in Example 10 and Comparative Example 7 was conducted in the same manner as in Test Example 1. The control sample is a commercially available non-calorie cola drink to which no Boletus edulis extract was blended.

Table 10 shows the results of the evaluation.

**[Table 10]**

| | Taste thickness | Sweet taste | Deliciousness | Comment |
|---|---|---|---|---|
| Control | 4.0 | 4.0 | 4.0 | |
| Comparative Example 7 | 4.9 | 4.3 | 1.6 | Odd taste and odd smell derived from the extract are present and unpleasant feeling is given. |
| Example 10 | 5.6 | 5.3 | 5.9 | Rich sweetness is felt. |

### [Example 11] Preparation of taste-improved stevia-containing non-calorie soda pop (saida) drink

The Boletus edulis extract prepared in Example 1 was added to a commercially available stevia-containing non-calorie soda pop drink so as to be 0.1 ppm. Thus, a taste-improved stevia-containing non-calorie soda pop drink was obtained.

### [Comparative Example 8] Preparation of stevia-containing non-calorie soda pop drink

The Boletus edulis extract prepared in Comparative Example 1 was added to a commercially available stevia-containing non-calorie soda pop drink so as to be 0.1 ppm. Thus, a stevia-containing non-calorie soda pop drink of Comparative Example 8 was obtained.

### [Test Example 9] Sensory Evaluation

The sensory evaluation of the stevia-containing non-calorie soda pop drinks prepared in Example 11 and Comparative Example 8 was conducted in the same manner as in Test Example 1. The control sample is a commercially available stevia-containing non-calorie soda pop drink to which no Boletus edulis extract was blended.

Table 11 shows the results of the evaluation.

**[Table 11]**

| | Taste thickness | Sweet taste | Deliciousness | Comment |
|---|---|---|---|---|
| Control | 4.0 | 4.0 | 4.0 | |
| Comparative Example 8 | 4.9 | 4.3 | 1.4 | Odd taste and odd smell derived from the extract are present and unpleasant feeling is given. |
| Example 11 | 5.9 | 5.4 | 5.7 | Characteristic miscellaneous taste and aftertaste sharpness are improved. |

### [Example 12] Preparation of taste-improved sugar-free black coffee drink

The Boletus edulis extract prepared in Example 1 was added to a commercially available sugar-free black coffee drink so as to be 20 ppm. Thus, a taste-improved sugar-free black coffee drink was obtained.

### [Comparative Example 9] Preparation of sugar-free black coffee drink

The Boletus edulis extract prepared in Comparative Example 1 was added to a commercially available black coffee drink so as to be 20 ppm. Thus, a sugar-free black coffee drink of Comparative Example 9 was obtained.

### [Test Example 10] Sensory Evaluation

The sensory evaluation of the sugar-free black coffee drinks prepared in Example 12 and Comparative Example 9 was conducted in the same manner as in Test Example 1. The control sample is a commercially available sugar-free black coffee drink to which no Boletus edulis extract was blended.

Table 12 shows the results of the evaluation.

**[Table 12]**

| | Richness | Bitter taste | Deliciousness | Comment |
|---|---|---|---|---|
| Control | 4.0 | 4.0 | 4.0 | |
| Comparative Example 9 | 4.9 | 4.3 | 2.0 | Odd taste and odd smell derived from the extract are present and unpleasant feeling is given. |
| Example 12 | 5.6 | 4.4 | 5.6 | Richness is enhanced. |

### [Example 13] Preparation of taste-improved vinegar drink

The Boletus edulis extract prepared in Example 1 was added to a solution, which was obtained by diluting a commercially available black vinegar six times with water, so as to be 20 ppm. Thus, a taste-improved vinegar drink was obtained.

### [Comparative Example 10] Preparation of vinegar drink

The Boletus edulis extract prepared in Comparative Example 1 was added to a solution, which was obtained by diluting a commercially available black vinegar six times with water, so as to be 20 ppm. Thus, a vinegar drink of Comparative Example 10 was obtained.

### [Test Example 11] Sensory Evaluation

The sensory evaluation of the vinegar drinks prepared in Example 13 and Comparative Example 10 was conducted in the same manner as in Test Example 1. The control sample is a commercially available vinegar drink to which no Boletus edulis extract was blended.

Table 13 shows the results of the evaluation.

**[Table 13]**

| | Richness | Suppression of sour taste | Deliciousness | Comment |
|---|---|---|---|---|
| Control | 4.0 | 4.0 | 4.0 | |
| Comparative Example 10 | 4.7 | 5.0 | 3.3 | Sour taste felt on the tongue is reduced. |
| Example 13 | 5.1 | 5.7 | 5.9 | Sour taste felt on the tongue is greatly reduced. |

### [Example 14] Preparation of taste-improved reduced-salt noodle soup

The Amanita hemibapha extract prepared in Example 2 was added to a reduced-salt noodle soup having a formulation 1 so as to be 20 ppm. Thus, a taste-improved reduced-salt noodle soup was obtained.

### [Test Example 12] Sensory Evaluation

The sensory evaluation of the reduced-salt noodle soup prepared in Example 14 was conducted in the same manner as in Test Example 1. The control sample is a commercially available reduced-salt noodle soup to which no Amanita hemibapha extract was blended.

Table 14 shows the results of the evaluation.

**[Table 14]**

| | Umami | Richness | Salty taste | Deliciousness | Comment |
|---|---|---|---|---|---|
| Control | 4.0 | 4.0 | 4.0 | 4.0 | |
| Example 14 | 5.4 | 5.7 | 5.3 | 5.9 | Umami and richness increase. Bitter taste characteristic to potassium chloride is reduced. |

### [Example 15] Preparation of taste-improved reduced-salt Chinese soup

The Amanita hemibapha extract prepared in Example 2 was added to a commercially available reduced-salt Chinese soup (a product in which 40% of sodium chloride was reduced) so as to be 20 ppm. Thus, a taste-improved reduced-salt soup was obtained.

### [Test Example 13] Sensory Evaluation

The sensory evaluation of the reduced-salt Chinese soup prepared in Example 15 was conducted in the same manner as in Test Example 1. The control sample is a commercially available reduced-salt Chinese soup to which no Amanita hemibapha extract was blended.

Table 15 shows the results of the evaluation.

**[Table 15]**

| | Umami | Richness | Salty taste | Spicy feeling | Deliciousness | Comment |
|---|---|---|---|---|---|---|
| Control | 4.0 | 4.0 | 4.0 | 4.0 | 4.0 | |
| Example 15 | 5.4 | 5.3 | 5.6 | 5.9 | 6.3 | Umami and richness increase. Salty taste and spicy feeling are enhanced. |

### [Example 16] Preparation of taste-improved 20% orange juice

The Amanita hemibapha extract prepared in Example 2 was added to a commercially available 20% orange juice so as to be 10 ppm. Thus, a taste-improved 20% orange juice was obtained.

### [Comparative Example 11] Preparation of 20% orange juice

The Amanita hemibapha extract prepared in Comparative Example 2 was added to a commercially available 20% orange juice so as to be 10 ppm. Thus, a 20% orange juice of Comparative Example 11 was obtained.

### [Test Example 14] Sensory Evaluation

The sensory evaluation of the 20% orange juices prepared in Example 16 and Comparative Example 11 was conducted in the same manner as in Test Example 1. The control sample is a commercially available 20% orange juice to which no Amanita hemibapha extract was blended.

Table 16 shows the results of the evaluation.

**[Table 16]**

| | Sweet taste | Fruit juice feeling | Deliciousness | Comment |
|---|---|---|---|---|
| Control | 4.0 | 4.0 | 4.0 | |
| Comparative Example 11 | 4.0 | 4.1 | 1.7 | Odd taste and odd smell derived from the extract are present and unpleasant feeling is given. |
| Example 16 | 5.0 | 5.1 | 5.4 | Natural sweet taste and juicy feeling are enhanced. |

### [Example 17] Preparation of taste-improved café au lait drink

The Amanita hemibapha extract prepared in Example 2 was added to a commercially available café au lait drink so as to be 10 ppm. Thus, a taste-improved café au lait drink was obtained.

### [Comparative Example 12] Preparation of café au lait drink

The Amanita hemibapha extract prepared in Comparative Example 2 was added to a commercially available café au lait drink so as to be 10 ppm. Thus, a café au lait drink of Comparative Example 12 was obtained.

### [Test Example 15] Sensory Evaluation

The sensory evaluation of the café au lait drinks prepared in Example 17 and Comparative Example 12 was conducted in the same manner as in Test Example 1. The control sample is a commercially available café au lait drink to which no Amanita hemibapha extract was blended.

Table 17 shows the results of the evaluation.

**[Table 17]**

| | Richness | Milky feeling | Sweet taste | Bitter taste | Deliciousness | Comment |
|---|---|---|---|---|---|---|
| Control | 4.0 | 4.0 | 4.0 | 4.0 | 4.0 | |
| Comparative Example 12 | 4.7 | 4.3 | 4.1 | 5.1 | 2.0 | Odd taste and odd smell derived from the extract are present and unpleasant feeling is given. |
| Example 17 | 5.3 | 5.4 | 5.1 | 5.3 | 5.4 | Natural milky feeling, richness, and sweet taste are enhanced. |

### [Example 18] Preparation of taste-improved stevia-containing non-calorie soda pop drink

The Amanita hemibapha extract prepared in Example 2 was added to a commercially available stevia-containing non-calorie soda pop drink so as to be 0.1 ppm. Thus, a taste-improved stevia-containing non-calorie soda pop drink was obtained.

### [Comparative Example 13] Preparation of stevia-containing non-calorie soda pop drink

The Amanita hemibapha extract prepared in Comparative Example 2 was added to a commercially available stevia-containing non-calorie soda pop drink so as to be 0.1 ppm. Thus, a stevia-containing non-calorie soda pop drink of Comparative Example 13 was obtained.

### [Test Example 16] Sensory Evaluation

The sensory evaluation of the stevia-containing non-calorie soda pop drinks prepared in Example 18 and Comparative Example 13 was conducted in the same manner as in Test Example 1. The control sample is a commercially available stevia-containing non-calorie soda pop drink to which no Amanita hemibapha extract was blended.

Table 18 shows the results of the evaluation.

**[Table 18]**

| | Taste thickness | Sweet taste | Deliciousness | Comment |
|---|---|---|---|---|
| Control | 4.0 | 4.0 | 4.0 | |
| Comparative Example 13 | 4.9 | 4.3 | 1.3 | Odd taste and odd smell derived from the extract are present and unpleasant feeling is given. |
| Example 18 | 5.4 | 4.7 | 5.4 | Characteristic miscellaneous taste and aftertaste sharpness are improved. |

### [Example 19] Preparation of taste-improved sugar-free black coffee drink

The Amanita hemibapha extract prepared in Example 2 was added to a commercially available sugar-free black coffee drink so as to be 20 ppm. Thus, a taste-improved sugar-free black coffee drink was obtained.

### [Comparative Example 14] Preparation of sugar-free black coffee drink

The Amanita hemibapha extract prepared in Comparative Example 2 was added to a commercially available sugar-free black coffee drink so as to be 20 ppm. Thus, a sugar-free black coffee drink of Comparative Example 14 was obtained.

### [Test Example 17] Sensory Evaluation

The sensory evaluation of the sugar-free black coffee drinks prepared in Example 19 and Comparative Example 14 was conducted in the same manner as in Test Example 1. The control sample is a commercially available sugar-free black coffee drink to which no Amanita hemibapha extract was blended.

Table 19 shows the results of the evaluation.

**[Table 19]**

| | Richness | Bitter taste | Deliciousness | Comment |
|---|---|---|---|---|
| Control | 4.0 | 4.0 | 4.0 | |
| Comparative Example 14 | 4.7 | 4.3 | 1.9 | Odd taste and odd smell derived from the extract are present and unpleasant feeling is given. |
| Example 19 | 5.9 | 4.4 | 5.4 | Richness is enhanced. |

### [Example 20] Preparation of taste-improved vinegar drink

The Amanita hemibapha extract prepared in Example 2 was added to a solution, which was obtained by diluting a commercially available black vinegar six times with water, so as to be 20 ppm. Thus, a taste-improved vinegar drink was obtained.

### [Comparative Example 15] Preparation of vinegar drink

The Amanita hemibapha extract prepared in Comparative Example 2 was added to a solution, which was obtained by diluting a commercially available black vinegar six times with water, so as to be 20 ppm. Thus, a vinegar drink of Comparative Example 15 was obtained.

### [Test Example 18] Sensory Evaluation

The sensory evaluation of the vinegar drinks prepared in Example 20 and Comparative Example 15 was conducted in the same manner as in Test Example 1. The control sample is a commercially available vinegar drink to which no Amanita hemibapha extract was blended.

Table 20 shows the results of the evaluation.

**[Table 20]**

| | Richness | Suppression of sour taste | Deliciousness | Comment |
|---|---|---|---|---|
| Control | 4.0 | 4.0 | 4.0 | |
| Comparative Example 15 | 4.9 | 4.7 | 3.6 | Sour taste felt on the tongue is reduced. |
| Example 20 | 5.1 | 5.6 | 5.6 | Sour taste felt on the tongue is greatly reduced. |

From the results of the above-described sensory tests, an effect of enhancing specific tastes and suppressing a specific taste (sour taste) was exhibited on any foods or drinks by blending the Boletus edulis extract of Example 1 or the Amanita hemibapha extract of Example 2. On the other hand, in the cases where the Boletus edulis extract of Comparative Example 1 or the Amanita hemibapha extract of Comparative Example 2 is blended, the taste enhancing/suppressing effect is little as compared with the cases of Examples. Furthermore, there were obtained results that taste(s) become weak or bad as compared with the control samples to which no extract is added. Accordingly, it was confirmed that the mushroom extracts can be utilized in a wide range of objects and are more excellent in the taste improving effect.

This application is based on Japanese Patent Application (No. 2013-083234) filed on April 11, 2013.

### Industrial Applicability

The mushroom extract of the present disclosure can be added to various foods or drinks, does not have a characteristic smell, can enhance specific senses of taste such as umami, richness, salty taste, spicy feeling, milky feeling, sweet taste, and fruit juice feeling, and can also suppress sour taste. Therefore, it becomes possible to improve taste properties that concern various preferences and thus the mushroom extract is useful as a taste improving agent of foods or drinks.

## Claims

1. Use of a mushroom extract as a taste improving agent for a food or a drink, the mushroom extract being obtained by a production process comprising:
a step of solvent-extracting at least one of a mushroom of the genus Boletus and a mushroom of the genus Amanita, thereby obtaining a solvent extract, and
a step of removing a flavor component from the solvent extract by performing an adsorption treatment and removing an adsorbed fraction.

2. The use of a mushroom extract according to claim 1, wherein a solvent to be used in the solvent extraction is water, ethanol, or hydrous ethanol.

3. The use of a mushroom extract according to claim 1 or 2, wherein the adsorption treatment comprises using at least one means selected from the group consisting of a synthetic adsorbent and active carbon.

4. The use of a mushroom extract according to claim 3, wherein the at least one means is a synthetic adsorbent.

5. The use of a mushroom extract according to any one of claims 1 to 4, wherein the mushroom of the genus Boletus is at least one selected from Boletus edulis, Boletus aestivalis, Boletus hiratsukae Nagasawa, and Boletus violaceofuscus and the mushroom of the genus Amanita is at least one of Amanita hemibapha and Amanita caesarea.

6. A method to produce a food or drink with enhanced taste comprising adding to the food or a drink a mushroom extract being obtained by a production process comprising:
a step of solvent-extracting at least one of a mushroom of the genus Boletus and a mushroom of the genus Amanita, thereby obtaining a solvent extract; and
a step of removing a flavor component from the solvent extract by performing an adsorption treatment and removing an adsorbed fraction.

## Patentansprüche

1. Verwendung eines Pilzextrakts als Geschmacksverbesserungsmittel für ein Nahrungsmittel oder ein Getränk, wobei der Pilzextrakt durch einen Produktionsprozess erhalten wird, der umfasst:
einen Schritt zur Lösungsmittelextraktion mindestens eines von einem Pilz der Gattung Boletus und einem Pilz der Gattung Amanita, wodurch ein Lösungsmittelextrakt erhalten wird, und
einen Schritt zum Entfernen einer Geschmackskomponente aus dem Lösungsmittelextrakt durch Durchführen einer Adsorptionsbehandlung und Entfernen einer adsorbierten Fraktion.

2. Verwendung eines Pilzextrakts nach Anspruch 1, wobei ein bei der Lösungsmittelextraktion zu verwendendes Lösungsmittel Wasser, Ethanol oder wasserhaltiges Ethanol ist.

3. Verwendung eines Pilzextrakts nach Anspruch 1 oder 2, wobei die Adsorptionsbehandlung die Verwendung mindestens eines Mittels umfasst, das aus der Gruppe ausgewählt ist, die aus einem synthetischen Adsorptionsmittel und Aktivkohle besteht.

4. Verwendung eines Pilzextrakts nach Anspruch 3, wobei das mindestens eine Mittel ein synthetisches Adsorptionsmittel ist.

5. Verwendung eines Pilzextrakts nach einem der Ansprüche 1 bis 4, wobei der Pilz der Gattung Boletus mindestens einer ist, der aus Boletus edulis, Boletus aestivalis, Boletus hiratsukae Nagasawa und Boletus violaceofuscus ausgewählt ist, und der Pilz der Gattung Amanita mindestens einer von Amanita hemibapha und Amanita caesarea ist.

6. Verfahren zur Herstellung eines Nahrungsmittels oder Getränks mit verbessertem Geschmack, das das Zugeben eines Pilzextrakts zu dem Nahrungsmittel oder Getränk umfasst, der durch einen Produktionsprozess erhalten wird, der umfasst:
einen Schritt zur Lösungsmittelextraktion mindestens eines von einem Pilz der Gattung Boletus und einem Pilz der Gattung Amanita, wodurch ein Lösungsmittelextrakt erhalten wird, und
einen Schritt zum Entfernen einer Geschmackskomponente aus dem Lösungsmittelextrakt durch Durchführen einer Adsorptionsbehandlung und Entfernen einer adsorbierten Fraktion.

## Revendications

1. Utilisation d'un extrait de champignon en tant qu'agent d'amélioration de goût pour un aliment ou une boisson, l'extrait de champignon étant obtenu par un procédé de production comprenant :
une étape d'extraction par solvant d'au moins un champignon du genre bolet et un champignon du genre amanite, permettant ainsi d'obtenir un extrait par solvant, et
une étape d'extraction d'un composant de saveur à partir de l'extrait par solvant en exécutant un traitement d'adsorption et par extraction d'une fraction adsorbée.

2. Utilisation d'un extrait de champignon selon la revendication 1, dans laquelle un solvant à utiliser dans l'extraction par solvant est de l'eau, de l'éthanol ou de l'éthanol hydreux.

3. Utilisation d'un extrait de champignon selon la revendication 1 ou 2, dans laquelle le traitement d'adsorption comprend l'utilisation d'au moins un moyen sélectionné dans le groupe constitué par un adsorbant synthétique et du charbon actif.

4. Utilisation d'un extrait de champignon selon la revendication 3, dans laquelle le au moins un moyen est un adsorbant synthétique.

5. Utilisation d'un extrait de champignon selon l'une quelconque des revendications 1 à 4, dans laquelle le champignon du genre bolet est au moins l'un sélectionné parmi boletus edulis, boletus aestivalis, boletus hiratsukae Nagasawa et boletus violaceofuscus et le champignon du genre amanite est au moins l'un parmi amanita hemibapha et amanita caesarea.

6. Procédé de production d'un aliment ou d'une boisson présentant un goût amélioré comprenant l'ajout à l'aliment ou à la boisson d'un extrait de champignon obtenu par un procédé de production comprenant :
une étape d'extraction par solvant d'au moins un champignon du genre bolet et un champignon du genre amanite, permettant ainsi d'obtenir un extrait par solvant ; et
une étape d'extraction d'un composant de saveur à partir de l'extrait par solvant en exécutant un traitement d'adsorption et par extraction d'une fraction adsorbée.
